# EUROPEAN PATENT SPECIFICATION

(11) **EP 3 202 865 B1**
(45) Date of publication and mention of the grant of the patent: **17.04.2019**
(21) Application number: 15846408.1
(22) Date of filing: 23.09.2015
(51) Int. Cl.: C09D 133/06, C09D 151/06

(54) **MATT COATING COMPOSITION, MATT COATING SHEET, AND MANUFACTURING METHOD THEREFOR**
MATTE BESCHICHTUNGSZUSAMMENSETZUNG, MATTE BESCHICHTUNGSFOLIE UND HERSTELLUNGSVERFAHREN DAFÜR
COMPOSITION DE REVÊTEMENT MAT, FEUILLE DE REVÊTEMENT MAT, ET SON PROCÉDÉ DE FABRICATION

(30) Priority: 30.09.2014 KR 20140130879
(43) Date of publication of application: 09.08.2017
(73) Proprietor: LG Hausys, Ltd., Seoul 07326 (KR)
(72) Inventor: SONG, Yea-Ri, Seoul 06918 (KR); PARK, Hwan-Seok, Seoul 04132 (KR); KWON, Hea-Won, Seoul 06558 (KR); KIM, Yu-Jun, Anyang-si Gyeonggi-do 14120 (KR); YUE, Seong-Hoon, Seongnam-si Gyeonggi-do 13603 (KR); YU, Da-Young, Uiwang-si Gyeonggi-do 16043 (KR); NAM, Hae-Rim, Seoul 08769 (KR)
(74) Representative: Gill Jennings & Every LLP
(86) International application number: PCT/KR2015/010044
(87) International publication number: WO 2016/052919

(56) References cited:
- JP-A- H09 217 296
- JP-A- H11 315 252
- KR-A- 20120 062 469
- KR-A- 20140 021 658
- US-A- 5 190 828
- US-A- 6 113 988
- US-A1- 2005 260 414

## Description

### [Technical Field]

The present invention relates to a matt coating composition, a matt coating sheet manufactured by using the same, and a manufacturing method therefor.

### [Background Art]

Articles such as building interior and exterior materials, furniture such as desks and chairs, etc., are subjected to surface treatment to protect surfaces thereof and to impart aesthetic property. The articles are variously surface-treated depending on uses thereof. In some cases, a high-gloss surface treatment may be performed, or a matt surface treatment may be performed. Generally, in order to perform the matt surface treatment, inorganic powder or polymer beads, etc., are used to reduce gloss.

For the surface treatment, a coating method or a method for attaching a sheet may be used. When the method for attaching the sheet is used, decorative sheets are generally used. As the decorative sheet, a polyvinyl chloride (PVC) sheet having low cost and excellent processability is widely used.

However, when the surface of the article is subjected to the matt surface treatment, there is a problem in that the surface is contaminated with external pollution sources, and when a surface modifier is used to overcome the problem, there is a problem in that a matt effect is reduced. Further, when a matt surface-treated decorative sheet is manufactured with the polyvinyl chloride (PVC) sheet, there is a problem in that a manufacturing process becomes complicated due to low heat resistance of polyvinyl chloride. Therefore, it is important to achieve the matt effect and stain resistance and to have excellent process efficiency and processability at the same time.

JPH09217296 relates to a coating agent for paper comprising an aqueous resin dispersion.

JPH11315252 relates to a coating resin composition.

### [Disclosure]

### [Technical Problem]

It is an aspect of the present invention to provide a matt coating composition capable of having an excellent matt effect and improving stain resistance.

It is another aspect of the present invention to provide a matt coating sheet capable of having both of excellent matt effect and stain resistance, and further having excellent surface strength.

It is still another aspect of the present invention to provide a manufacturing method for the matt coating sheet having excellent process efficiency.

### [Technical Solution]

In accordance with one aspect of the present invention, a matt coating composition includes: a (meth)acrylic acid ester-based resin containing a hydroxyl group; and a silicone-acrylate graft resin containing a polyacrylate main chain and a silicone side chain. The weight ratio of the (meth)acrylic acid ester-based resin containing a hydroxyl group to the silicone-acrylate graft resin is 1 : 6 to 1 : 4.

The (meth)acrylic acid ester-based resin containing a hydroxyl group may have a glass transition temperature of about 50 °C to about 100 °C.

The (meth)acrylic acid ester-based resin containing a hydroxyl group may have a hydroxyl value (OH value) of about 30 to about 60.

The silicone-acrylate graft resin may contain a hydroxyl group.

The silicone-acrylate graft resin may have a hydroxyl value (OH value) of about 20 to about 50.

The silicone side chain may be formed by grafting a silicone compound having a weight average molecular weight of about 1,000 to about 10,000.

The silicone-acrylate graft resin may contain about 1 to about 20 wt% of the silicone side chain.

The (meth)acrylic acid ester-based resin containing a hydroxyl group may have a weight average molecular weight of about 40,000 to about 80,000.

The silicone-acrylate graft resin may have a weight average molecular weight of about 1,000 to about 20,000.

The (meth)acrylic acid ester-based resin containing a hydroxyl group may be a copolymer formed by copolymerizing a first monomer including at least one selected from the group consisting of n-butyl(meth)acrylate, isobutyl(meth)acrylate, methyl(meth)acrylate and a combination thereof; and a second monomer including at least one selected from the group consisting of hydroxyethyl(meth)acrylate, ethyleneglycoldi(meth)acrylate, and a combination thereof.

The (meth)acrylic acid ester-based resin containing a hydroxyl group may be the copolymer formed by copolymerizing the first monomer and the second monomer at a molar ratio of about 2 : 1 to about 10 : 1.

In the silicone-acrylate graft resin, the polyacrylate main chain may include a polymer or a copolymer of monomers including at lease one selected from the group consisting of n-butyl(meth)acrylate, isobutyl(meth)acrylate, methyl(meth)acrylate, hydroxyethyl(meth)acrylate, and a combination thereof.

A total content of the (meth)acrylic acid ester-based resin containing a hydroxyl group and the silicone-acrylate graft resin may be about 70 to about 95 wt%.

The matt coating composition may further include an isocyanate-based curing agent, microparticles, and a solvent.

In accordance with another aspect of the present invention, a matt coating sheet includes: a resin layer containing polyvinyl chloride (PVC); and a hard coating layer formed from the matt coating composition as described above on one surface of the resin layer.

The silicone side chain of the silicone-acrylate graft resin may be exposed on a surface of the hard coating layer.

The surface of the hard coating layer may have a Gloss at an angle of 60 degrees of 3.0 or less, and have stain resistance of Grade 4 or more, the stain resistance measured by the standard specification DIN EN 12720: 1997-10.

The matt coating sheet may further include a printing layer and a base layer on one surface of the resin layer.

In accordance with still another aspect of the present invention, a manufacturing method for a matt coating sheet includes: applying the matt coating composition as described above onto a resin layer containing polyvinyl chloride (PVC); and manufacturing a hard coating layer by directly heat-curing the matt coating composition applied onto the resin layer.

The matt coating composition may contain about 15 wt% to about 25 wt% of solid.

The manufacturing of the hard coating layer may be performed by directly heat-curing the matt coating composition applied onto the resin layer at about 40°C to about 60°C .

### [Advantageous Effects]

The matt coating composition and the matt coating sheet manufactured by using the same may implement excellent matt effect and excellent stain resistance.

In addition, the manufacturing method for a matt coating sheet may reduce manufacturing costs and simplify the manufacturing process, thereby securing excellent process efficiency.

### [Description of Drawings]

FIG. 1 schematically shows a cross section of a matt coating sheet according to an exemplary embodiment of the present invention.
FIG. 2 schematically shows a cross section of a matt coating sheet according to another exemplary embodiment of the present invention.

### [Best Mode]

Hereinafter, various advantages and features of the present invention and methods accomplishing thereof will become apparent with reference to the following description of Examples. However, the present invention is not limited to exemplary embodiments disclosed below but will be implemented in various forms. These exemplary embodiments are provided by way of example only so that a person of ordinary skilled in the art can fully understand the disclosures of the present invention and the scope of the present invention. Therefore, the present invention will be defined only by the scope of the appended claims. Like reference numerals refer to like components throughout the specification.

In the drawings, the thickness of various layers and regions are exaggerated for clarity. In the drawings, thicknesses of partial layers and regions are exaggerated for convenience of explanation.

In an exemplary embodiment of the present invention, the present invention provides a matt coating composition including a (meth)acrylic acid ester-based resin containing a hydroxyl group; and a silicone-acrylate graft resin containing a polyacrylate main chain and a silicone side chain. The weight ratio of the (meth)acrylic acid ester-based resin containing a hydroxyl group to the silicone-acrylate graft resin is 1 : 6 to 1 : 4.

In general, the coating composition for surface treatment includes various functional ingredients in a binder resin. The binder resin may be generally an acrylic resin. The matt coating composition according to an exemplary embodiment of the present invention includes a mixture of two kinds of resins as the binder resin, such that an excellent matt effect and stain resistance may be simultaneously implemented, excellent surface strength may be ensured, and a manufacturing process may be simplified to improve process efficiency.

Specifically, the matt coating composition may include the (meth)acrylic acid ester-based resin containing a hydroxyl group, and the silicone-acrylate graft resin.

The (meth)acrylic acid ester-based resin containing a hydroxyl group is a low-temperature curable resin, and specifically, may have a glass transition temperature (Tg) of about 50 °C to about 100 °C. When the glass transition temperature of the (meth)acrylic acid ester-based resin containing a hydroxyl group satisfies the above-described range, the matt coating composition may be heat-cured under condition of about 50°C or less, and even if the composition is heat-cured in a state in which it is applied onto a resin layer containing polyvinyl chloride (PVC), the resin layer is not damaged. Therefore, a separate transfer process is not required. When the glass transition temperature is less than about 50°C, the hard coating layer formed from the matt coating composition does not ensure a sufficient surface hardness. When the glass transition temperature is more than 100°C, a curing speed is extremely fast during a manufacturing process, which may deteriorate processability.

The (meth)acrylic acid ester-based resin containing a hydroxyl group may have a hydroxyl value (OH value) of about 30 to about 60. The 'hydroxyl value' refers to the number of moles of the hydroxyl group (OH group) included in 1000 g of the resin. The resin represents the hydroxyl value (OH value) in the above-described range, such that the hard coating layer formed using the matt coating composition may ensure an appropriate curing degree and excellent surface strength. When the hydroxyl value of the resin is more than the above-described range, it may be preferred in view of reactivity, but there is a concern that the sheet formed from the matt coating composition may not ensure an appropriate curing degree.

The matt coating composition may include the silicone-acrylate graft resin together with the (meth)acrylic acid ester-based resin containing a hydroxyl group in order to improve the stain resistance. The silicone-acrylate graft resin contains the polyacrylate main chain and the silicone side chain, and specifically, may have a structure in which the silicone side chain is grafted to the polyacrylate main chain.

The silicone-acrylate graft resin may include the hydroxyl group to ensure an appropriate curing degree by heat-curing. The silicone-acrylate graft resin contains the hydroxyl group, such that the matt coating composition may ensure the appropriate curing degree by heat-curing, and the silicone-acrylate graft resin participates in a direct reaction, which may be advantageous to increase curing density.

When the silicone-acrylate graft resin contains the hydroxyl group, the silicone-acrylate graft resin may have the hydroxyl value (OH value) of about 20 to about 50. The hydroxyl group in the silicone-acrylate graft resin is included to have the hydroxyl value, such that physical properties such as compatibility, a curing degree, etc., may be improved while securing an effect of improving stain resistance.

The silicone-acrylate graft resin contains the polyacrylate main chain and the silicone side chain, and the silicone side chain may be formed by grafting a silicone compound having a weight average molecular weight of about 1,000 to about 10,000. The silicone side chain is formed from the silicone compound satisfying the above-described range of weight average molecular weight, such that the stain resistance on the surface of the hard coating layer formed from the matt coating composition may be greatly improved and a slip property of the surface may be increased.

The silicone-acrylate graft resin may contain about 1 to about 20 wt% of the silicone side chain. The silicone side chain in the silicone-acrylate graft resin satisfies the above-described range of content, such that the stain resistance on the surface of the hard coating layer formed from the matt coating composition may be effectively improved, and an effect of uniformly distributing the silicone side chain in the resin may be obtained.

The (meth)acrylic acid ester-based resin containing a hydroxyl group may have a weight average molecular weight of about 40,000 to about 80,000. When the (meth)acrylic acid ester-based resin containing a hydroxyl group may have the above-described range of weight average molecular weight, the matt coating composition may be heat-cured at a relatively low temperature to secure an appropriate curing degree, and the hard coating layer manufactured by using the matt coating composition may not cause cracks on the surface at the time of stretching at a high temperature.

The silicone-acrylate graft resin may have a weight average molecular weight of from about 1,000 to about 20,000, and specifically from about 5,000 to about 15,000. When the weight average molecular weight of the silicone-acrylate graft resin satisfies the above-described range, the matt coating composition may secure an appropriate slip property and may implement excellent stain resistance.

The (meth)acrylic acid ester-based resin containing a hydroxyl group may be formed by polymerization from a monomer mixture including a (meth)acrylic acid ester-based monomer containing a hydroxyl group, and may be formed by copolymerization of two or more kinds of monomers.

Specifically, the (meth)acrylic acid ester-based resin containing a hydroxyl group may be a copolymer formed by copolymerizing a first monomer including at least one selected from the group consisting of n-butyl(meth)acrylate, isobutyl(meth)acrylate, methyl(meth)acrylate and a combination thereof; and a second monomer including at least one selected from the group consisting of hydroxyethyl(meth)acrylate, ethyleneglycoldi(meth)acrylate, and a combination thereof. The 'first monomer' is an acrylate monomer without containing a hydroxyl group, and the 'second monomer' is an acrylate monomer containing the hydroxyl group.

Here, the (meth)acrylic acid ester-based resin containing a hydroxyl group may be the copolymer formed by copolymerization from the monomer mixture in which a molar ratio of the first monomer to the second monomer is about 2 : 1 to about 10 : 1. When the molar ratio of the first monomer to the second monomer satisfies the above-described range, the (meth)acrylic acid ester-based resin containing a hydroxyl group may be heat-cured at a relatively low temperature, thereby improving process efficiency at the time of manufacturing the matt coating sheet using the matt coating composition.

The silicone-acrylate graft resin includes the polyacrylate main chain and the silicone side chain, and specifically, may have a structure in which the silicone side chain is grafted to the polyacrylate main chain.

Specifically, the polyacrylate main chain may be a polymer or a copolymer of monomers including at lease one selected from the group consisting of n-butyl(meth)acrylate, isobutyl(meth)acrylate, methyl(meth)acrylate, hydroxyethyl(meth)acrylate, and a combination thereof.

The silicone side chain is formed by grafting the silicone compound onto the polyacrylate main chain. Specifically, the silicone compound may include a structure represented by Chemical Formula 1 below: 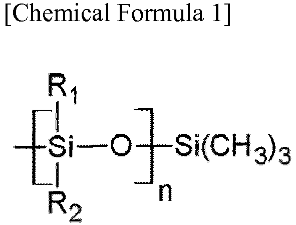 in Chemical Formula 1, R₁ and R₂ are each independently hydrogen, deuterium, C1 to C40 alkyl group, C1 to C40 alkenyl group, C1 to C40 alkynyl group, C3 to C40 cycloalkyl group, C3 to C40 heterocycloalkyl group, C3 to C40 cycloalkenyl group, C3 to C40 heterocycloalkenyl group, C3 to C40 cycloalkynyl group, C3 to C40 heterocycloalkynyl group, C5 to C40 aryl group, C3 to C40 heteroaryl group, C6 to C40 arylalkyl group or silane group, and n may be from 20 to 130.

The silicone side chain of the silicone-acrylate graft resin is formed from the silicone compound, such that the matt coating composition may implement excellent stain resistance together with the matt effect.

The matt coating composition includes a mixture of the (meth)acrylic acid ester-based resin containing a hydroxyl group and the silicone-acrylate graft resin, as the binder resin. Here, the matt coating composition may include about 70 to 95 wt% of the binder resin. The matt coating composition includes the binder resin in the above-described range of contents, such that an appropriate solid content may be contained to improve a coating property, and to secure an excellent matt effect and stain resistance.

In the binder resin, a weight ratio of the (meth)acrylic acid ester-based resin containing a hydroxyl group to the silicone-acrylate graft resin is 1 : 6 to 1 : 4. The two kinds of resins are included in the above-described weight ratio, such that the process efficiency and stain resistance may be simultaneously improved, and excellent surface strength may be implemented.

The matt coating composition may further include an isocyanate curing agent, microparticles, and a solvent, together with the binder resin.

The isocyanate curing agent may react with the hydroxyl group included in the (meth)acrylic acid ester-based resin containing a hydroxyl group and included in the silicone-acrylate graft resin to form a urethane structure. When the matt coating composition is coated on the resin layer containing polyvinyl chloride (PVC) to form the hard coating layer, the urethane structure may serve to improve close adhesion force between the resin layer and the hard coating layer.

Specifically, the isocyanate-based curing agent may further include at least one selected from the group consisting of hexamethylene diisocyanate (HDI), isophorone diisocyanate (IPDI), xylene diisocyanate (XDI), and a combination thereof.

When the matt coating composition includes the isocyanate curing agent, the isocyanate curing agent may have a content of about 1 to about 10 wt%. When the isocyanate curing agent has the above-described range of content, the heat-curing may be efficiently performed, and the appropriate curing degree may be secured without deteriorating the matt effect and the effect of improving stain resistance.

The microparticles exhibit the matt effect by reducing gloss, and specifically, may include at least one selected from the group consisting of silica particles, polyurethane beads, polymethyl methacrylate beads (PMMA beads), ceramic particles, and a combination thereof.

The microparticles may have an average particle diameter of about 1 to about 10 *µ*m, and when the microparticles have the above-described range of average particle diameter, the hard coating layer formed by the matt coating composition may exhibit an excellent matt effect as compared to the thickness. In the above-described range, as the average particle diameter is larger, the gloss may be reduced with smaller content of the particles to be added.

When the matt coating composition includes the microparticles, the microparticles may have a content of about 5 to about 20 wt%. When the microparticles have the above-described range of content, the excellent matt effect may be implemented even without deteriorating the effect of improving stain resistance.

The solvent is used to allow the matt coating composition to have excellent coating property and close adhesion property. Specifically, the solvent may include alkane solvents such as pentane, 1,1,2-trichlorotrifluoroethane, cyclopentane, heptane, hexane, iso-octane, cyclohexane, dichloromethane, etc.; ethers such as tetrahydrofuran, 1,4-dioxane, etc.; benzene solvents such as toluene, xylene, chlorobenzene, dichlorobenzene, etc.; ketone solvents such as methyl ethyl ketone, methyl butyl ketone, methyl isobutyl ketone, diethyl ketone, dipropyl ketone, cyclohexanone, etc.; and alcohol solvents such as methanol, ethanol, isopropanol, butanol, etc.

For example, when the solvent includes the ketone solvent, surface properties of the resin layer may be advantageously modified to improve close adhesion property with the hard coating layer at the time of applying the matt coating composition onto the resin layer containing polyvinyl chloride (PVC) to form the hard coating layer as described later.

Another exemplary embodiment of the present invention provides a matt coating sheet including: a resin layer containing polyvinyl chloride (PVC); and a hard coating layer formed from the matt coating composition as described above on one surface of the resin layer.

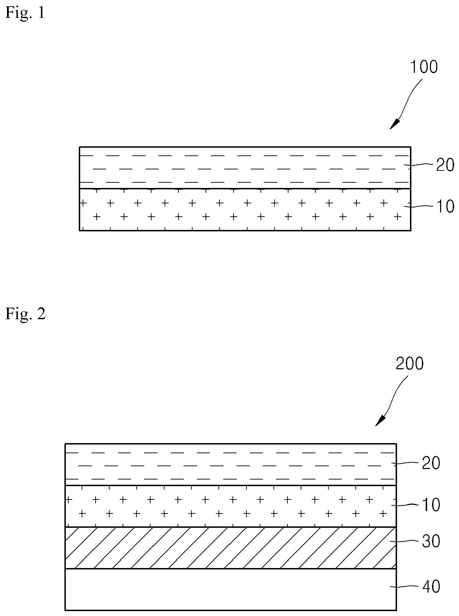

FIG. 1 schematically shows a cross section of the matt coating sheet 100 according to an exemplary embodiment of the present invention. The matt coating sheet 100 may include the resin layer 10 and the hard coating layer 20, wherein the resin layer 10 may contain polyvinyl chloride (PVC). The hard coating layer 20 may be formed on one surface of the resin layer 10, and may contain the matt coating composition.

The matt coating sheet includes the hard coating layer formed from the matt coating composition on one surface of the resin layer containing polyvinyl chloride (PVC), such that excellent matt effect and stain resistance may be secured together, and excellent process efficiency may be exhibited in the manufacturing process.

Specifically, the matt coating composition includes the silicone-acrylate graft resin as one component of the binder resin, and the silicone side chain of the silicone-acrylate graft resin may be exposed on the surface of the hard coating layer formed therefrom. Since the silicone side chain is exposed on the surface of the hard coating layer, the matt coating sheet may improve the stain resistance together with the excellent matt effect.

Specifically, the surface of the hard coating layer may have a contact angle of about 90° to about 100°, and the 'contact angle' is obtained by dropping about 0.01 to about 0.02 g of water onto the surface of the hard coating layer, and measuring an angle between the surface of the hard coating layer and a surface of water from an inside of water. The above-described range of contact angle may be exhibited by exposing the silicone side chain onto the surface of the hard coating layer. When the above-described range of contact angle is exhibited on the surface of the hard coating layer, it is possible to provide a property in which the hard coating layer is not wetted by liquid, and to secure excellent stain resistance. The surface of the hard coating layer has the above-described range of contact angle, such that excellent stain resistance may be implemented based on the appropriate slip property.

More specifically, the surface of the hard coating layer may have a Gloss at an angle of 60 degrees of 3.0 or less, and have stain resistance of Grade 4 or more, the stain resistance measured by the standard specification DIN EN 12720: 1997-10. Here, the Gloss may be about 2.0 or less, and for example, may be about 1.5 or less. The surface of the hard coating layer has the above-described range of Gloss and stain resistance, such that the matt coating sheet may secure excellent stain resistance together with excellent matt effect.

In the matt coating sheet 100, the thickness of the resin layer 10 may be about 100 to about 300 *µ*m. The thickness of the resin layer satisfies the above-described range, such that excellent durability from a substrate may be secured in a process of forming the hard coating layer on one surface of the resin layer, and the matt coating sheet may exhibit excellent strength.

In addition, the thickness of the hard coating layer 20 may be about 4 to about 10 *µ*m. The thickness of the hard coating layer satisfies the above-described range, such that an excellent matt effect and stain resistance may be exhibited together, and when the substrate is furniture, etc., an appropriate hardness required during the use may be secured.

The matt coating sheet may further include a printing layer and a base layer on one surface of the resin layer. Specifically, when the hard coating layer is formed on the resin layer, the printing layer and the base layer may be formed below the resin layer.

FIG. 2 schematically shows a cross section of the matt coating sheet 200 according to another exemplary embodiment of the present invention.

Referring to FIG. 2, the matt coating sheet 200 may include the resin layer 10 containing polyvinyl chloride (PVC) and the hard coating layer 20 formed on one surface of the resin layer 10, and may further include the printing layer 30 and the base layer 40 formed on the other surface of the resin layer 20.

The printing layer 30 imparts an aesthetic effect to the matt coating sheet 200, and may include various patterns or may be engraved and embossed. For example, the printing layer 30 may be manufactured by a gravure printing method or a screen printing method, but is not limited thereto.

The base layer 40 serves as a support for the matt coating sheet 200, and may be manufactured by press or roll pressing, but is not limited thereto.

Both of the printing layer 30 and the base layer 40 may contain polyvinyl chloride (PVC). The printing layer 30 and the base layer 40 contain polyvinyl chloride (PVC), such that mutual close adhesion property may be excellently secured, and even at an interface between the printing layer 30 and the resin layer 10, excellent close adhesion property may be secured.

Still another exemplary embodiment of the present invention provides a manufacturing method for a matt coating sheet, the manufacturing method including: applying the matt coating composition as described above onto a resin layer containing polyvinyl chloride (PVC); and manufacturing a hard coating layer by directly heat-curing the matt coating composition applied onto the resin layer.

In general, a polyvinyl chloride (PVC) sheet is used as a decorative sheet for exhibiting the matt effect. The polyvinyl chloride (PVC) has excellent versatility and processability, but weak heat resistance, and thus, the PVC sheet has a problem in being manufactured by directly coating and curing a thermosetting composition on the resin layer containing the PVC.

Accordingly, in general, the polyvinyl chloride (PVC) sheet is manufactured by applying and curing a composition for a matt coating effect onto a film such as polyethylene terephthalate (PET) having high heat resistance to manufacture a transfer film, and transferring the transfer film on the polyvinyl chloride (PVC) film. However, the method separately requires the step of manufacturing the transfer film, which may reduce process efficiency and increase manufacturing costs.

On the other hand, the manufacturing method for a matt coating sheet is able to manufacture the hard coating layer by directly applying and heat-curing the matt coating composition onto the resin layer containing polyvinyl chloride (PVC), such that excellent matt effect and stain resistance may be secured, and at the same time, the process efficiency may be improved, and the manufacturing cost may be reduced.

Specifically, the matt coating composition includes the (meth)acrylic acid ester-based resin containing a hydroxyl group, and the silicone-acrylate graft resin, and the manufacturing method for a matt coating sheet may include applying the matt coating composition onto the resin layer containing polyvinyl chloride (PVC).

In the step of applying the matt coating composition onto the resin layer containing polyvinyl chloride (PVC), the matt coating composition may contain about 15 wt% to about 25 wt% of solid. When the content of the solid satisfies the above-described range, the matt coating composition may secure an excellent coating property, and may be uniformly applied onto the resin layer containing polyvinyl chloride (PVC).

The method for applying the matt coating composition may be performed, for example, by gravure or D-bar coating method under condition where the content range of the solid is maintained, and it is possible to control an appropriate thickness depending on a size of the microparticle by applying the matt coating composition according to the condition and the method.

In the manufacturing method for a matt coating sheet, the matt coating composition may be applied onto the resin layer, and then, directly heat-cured to cure the matt coating composition. The matt coating composition may be heat-cured in a state in which it is applied onto the resin layer, and may be formed into the hard coating layer without damaging the resin layer containing polyvinyl chloride (PVC).

Specifically, the step of manufacturing the hard coating layer may be performed by directly heat-curing the matt coating composition applied onto the resin layer at about 40 °C to about 60 °C, and more specifically, at about 45°C to about 55 °C. The matt coating composition is prepared by heat-curing at the above-described range of temperature, such that it is possible to form the hard coating layer having an appropriate curing degree, and to implement excellent matt effect and stain resistance even without damaging the resin layer containing polyvinyl chloride (PVC).

Hereinafter, specific Examples of the present invention will be provided. Meanwhile, Examples to be described below are just provided for specifically exemplifying or explaining the present invention, and accordingly, the present invention is not limited to the following Examples.

### <Examples and Comparative Examples>

### Example 1

A first resin having a glass transition temperature of 60 °C was prepared by copolymerizing isobutyl methacrylate, methyl methacrylate, hydroxyethyl methacrylate and ethyleneglycol dimethacrylate at a molar ratio of 2 : 2 : 1 : 1. A second resin was prepared by copolymerizing n-butyl methacrylate, methyl methacrylate, hydroxyethyl methacrylate, and silicone-methacrylate (silicone-MA) formed from a silicone compound having a weight average molecular weight (Mw) of 5,000 at a molar ratio of 1 : 1.5 : 5 : 0.01. The first resin is the (meth)acrylic acid ester-based resin containing a hydroxyl group, and the second resin is the silicone-acrylate graft resin. The first resin and the second resin were mixed at a weight ratio of 1 : 5 to prepare a binder resin, and 85 wt% of the binder resin, 5 wt% of an isocyanate-based curing agent (AH2100, Aekyung Chemical), and 10 wt% of silica particles (E1011, Kangshin Industrial Co., Ltd.) were mixed in a ketone solvent to prepare a matt coating composition. A polyvinyl chloride (PVC) resin layer having a thickness of 200 *µ*m was prepared, and then, the matt coating composition was applied onto one surface of the resin layer at room temperature by a bar-coating method. Then, the matt coating composition applied onto the resin layer was heat-cured at 50 °C for 1 minute, and then, dried at 50 °C for 24 hours, thereby forming a hard coating layer having a thickness of 7 *µ*m. Accordingly, a matt coating sheet including the resin layer and the hard coating layer formed on one surface of the resin layer was manufactured.

### Comparative Example A

The matt coating sheet was manufactured by the same method as Example 1 except for preparing a binder resin by mixing the first resin and the second resin at a weight ratio of 1 : 1.

### Example 3

The matt coating sheet was manufactured by the same method as Example 1 except for using a first resin having a glass transition temperature of 25 °C formed by copolymerizing isobutyl methacrylate (IBMA), methyl methacrylate (MMA), hydroxyethyl methacrylate (HEMA) and ethylmethacrylate (EMA) at a molar ratio of 2: 2 : 1 : 3.

### Comparative Example 1

The matt coating sheet was manufactured by the same method as Example 1 except that the binder resin did not contain the first resin.

### Comparative Example 2

The matt coating sheet was manufactured by the same method as Example 1 except that the binder resin did not contain the second resin.

### <Evaluation>

### Experimental Example 1: Measurement of surface strength

With respect to the matt coating sheets of Example 1, Comparative Example A and Comparative Examples 1 and 2, the pencil hardness of the surface of the hard coating layer was measured using an electric pencil hardness tester (Coretech). The pencil hardness is increased in the order of 6B, 5B, 4B, 3B, 2B, B, HB, F, H, 2H, 3H, 4H, 5H, 6H, 7H, 8H, and 9H, and as the pencil hardness is increased, surface strength is excellent. Results thereof were shown in Table 1 below.

### Experimental Example 2: Measurement of Gloss:

With respect to the matt coating sheets of Example 1, Comparative Example A and Comparative Examples 1 and 2, the Gloss of the surface of the hard coating layer at an angle of 60 degrees was measured using a gloss meter (BYK). As the numerical value indicating the Gloss is smaller, the matt effect is more excellent. Results thereof were shown in Table 1 below.

### Experimental Example 3: Measurement of stain resistance

With respect to the matt coating sheets of Example 1, Comparative Example A and Comparative Examples 1 and 2, the stain resistance of the surface of the hard coating layer was measured according to the standard specification 'DIN EN 12720: 1997-10, 1B or more', and the grades were measured according to the following evaluation criteria and shown in Table 1 below. The evaluation criteria were based on the following 1) to 6). 1) Grade 5: No visible change, 2) Grade 4: Minimal change in gloss or color, 3) Grade 3: Slight change in gloss or color without change of the hard coating layer, 4) Grade 2: Severe change in gloss or color visually without change of the hard coating layer, 5) Grade 1: the hard coating layer was damaged and there was severe change in gloss or color, and 6) Non-evaluated: the hard coating layer was peeled or broken.

**[Table 1]**

| | Pencil Hardness | Gloss | Stain Resistance |
|---|---|---|---|
| Example 1 | F | 1.5 | Grade 4 |
| Comparative Example A | F | 1.6 | Grade 4 |
| Example 3 | HB | 1.6 | Grade 4 |
| Comparative Example 1 | B | 1.7 | Grade 3 |
| Comparative Example 2 | F | 1.6 | Grade 2 |

Referring to Table 1 above, it could be appreciated that the matt coating sheets of Example 1 exhibited excellent surface strength and matt effect while simultaneously exhibiting improved stain resistance. On the contrary, the matt coating sheets of Comparative Examples 1 and 2 had low surface strength and an insufficient matt effect, and lower stain resistance as compared to those of Example 1.

### [Detailed Description of Main Elements]

- 10: 100, 200:: Matt coating sheet Resin layer
- 20:: Hard coating layer
- 30:: Printing layer
- 40:: Base layer

## Claims

1. A matt coating composition comprising:
a (meth)acrylic acid ester-based resin containing a hydroxyl group; and
a silicone-acrylate graft resin containing a polyacrylate main chain and a silicone side chain,
wherein a weight ratio of the (meth)acrylic acid ester-based resin containing a hydroxyl group to the silicone-acrylate graft resin is 1 : 6 to 1 : 4.

2. The matt coating composition of claim 1, wherein the (meth)acrylic acid ester-based resin containing a hydroxyl group has a glass transition temperature of 50 °C to 100 °C.

3. The matt coating composition of claim 1, wherein the silicone-acrylate graft resin contains a hydroxyl group.

4. The matt coating composition of claim 1, wherein the silicone side chain is formed by grafting a silicone compound having a weight average molecular weight of 1,000 to 10,000.

5. The matt coating composition of claim 1, wherein the silicone-acrylate graft resin contains 1 to 20 wt% of the silicone side chain.

6. The matt coating composition of claim 1, wherein the (meth)acrylic acid ester-based resin containing a hydroxyl group has a weight average molecular weight of 40,000 to 80,000 and the silicone-acrylate graft resin has a weight average molecular weight of 1,000 to 20,000.

7. The matt coating composition of claim 1, wherein the (meth)acrylic acid ester-based resin containing a hydroxyl group is a copolymer formed by copolymerizing a first monomer including at least one selected from the group consisting of n-butyl(meth)acrylate, isobutyl(meth)acrylate, methyl(meth)acrylate and a combination thereof; and a second monomer including at least one selected from the group consisting of hydroxyethyl(meth)acrylate, ethyleneglycoldi(meth)acrylate, and a combination thereof.

8. The matt coating composition of claim 7, wherein the (meth)acrylic acid ester-based resin containing a hydroxyl group is the copolymer formed by copolymerizing the first monomer and the second monomer at a molar ratio of 2 : 1 to 10 : 1.

9. The matt coating composition of claim 1, wherein in the silicone-acrylate graft resin, the polyacrylate main chain includes a polymer or a copolymer of monomers including at lease one selected from the group consisting of n-butyl(meth)acrylate, isobutyl(meth)acrylate, methyl(meth)acrylate, hydroxyethyl(meth)acrylate, and a combination thereof.

10. The matt coating composition of claim 1, wherein a total content of the (meth)acrylic acid ester-based resin containing a hydroxyl group and the silicone-acrylate graft resin is 70 to 95 wt%.

11. A matt coating sheet comprising:
a resin layer containing polyvinyl chloride (PVC); and
a hard coating layer formed from the matt coating composition of any one of claims 1 to 10 on one surface of the resin layer.

12. The matt coating sheet of claim 11, wherein the silicone side chain of the silicone-acrylate graft resin is exposed on a surface of the hard coating layer.

13. A manufacturing method for a matt coating sheet comprising:
applying the matt coating composition of any one of claims 1 to 10 onto a resin layer containing polyvinyl chloride (PVC); and
manufacturing a hard coating layer by directly heat-curing the matt coating composition applied onto the resin layer.

## Patentansprüche

1. Matte Beschichtungszusammensetzung, die Folgendes umfasst:
ein Harz auf (Meth)acrylsäureester-Basis, das eine Hydroxylgruppe enthält; und
ein Silikon-Acrylat-Pfropfharz, das eine Polyacrylat-Hauptkette und eine Silikon-Seitenkette enthält,
wobei ein Gewichtsverhältnis des eine Hydroxylgruppe enthaltenden Harzes auf (Meth)acrylsäureester-Basis zu dem Silikon-Acrylat-Pfropfharz 1 : 6 bis 1 : 4 beträgt.

2. Matte Beschichtungszusammensetzung nach Anspruch 1, wobei das eine Hydroxylgruppe enthaltende Harz auf (Meth)acrylsäureester-Basis eine Glasübergangstemperatur von 50 °C bis 100 °C aufweist.

3. Matte Beschichtungszusammensetzung nach Anspruch 1, wobei das Silikon-Acrylat-Pfropfharz eine Hydroxylgruppe enthält.

4. Matte Beschichtungszusammensetzung nach Anspruch 1, wobei die Silikon-Seitenkette durch Pfropfen einer Silikonverbindung mit einem Gewichtsmittel des Molekulargewichts von 1000 bis 10 000 gebildet wird.

5. Matte Beschichtungszusammensetzung nach Anspruch 1, wobei das Silikon-Acrylat-Pfropfharz 1 bis 20 Gew.-% der Silikon-Seitenkette enthält.

6. Matte Beschichtungszusammensetzung nach Anspruch 1, wobei das eine Hydroxylgruppe enthaltende Harz auf (Meth)acrylsäureester-Basis ein Gewichtsmittel des Molekulargewichts von 40 000 bis 80 000 aufweist und das Silikon-Acrylat-Pfropfharz ein Gewichtsmittel des Molekulargewichts von 1000 bis 20 000 aufweist.

7. Matte Beschichtungszusammensetzung nach Anspruch 1, wobei es sich bei dem eine Hydroxylgruppe enthaltenden Harz auf (Meth)acrylsäureester-Basis um ein Copolymer handelt, das durch Copolymerisieren der Folgenden gebildet wird: eines ersten Monomers, das mindestens eines aus der aus n-Butyl(meth)acrylat, Isobutyl(meth)acrylat, Methyl(meth)acrylat und einer Kombination derselben bestehenden Gruppe ausgewähltes beinhaltet; und eines zweiten Monomers, das mindestens eines aus der aus Hydroxyethyl(meth)acrylat, Ethylenglycoldi(meth)acrylat und einer Kombination derselben bestehenden Gruppe ausgewähltes beinhaltet.

8. Matte Beschichtungszusammensetzung nach Anspruch 7, wobei es sich bei dem eine Hydroxylgruppe enthaltenden Harz auf (Meth)acrylsäureester-Basis um das durch Copolymerisieren des ersten Monomers und des zweiten Monomers in einem Molverhältnis von 2 : 1 bis 10 : 1 gebildete Copolymer handelt.

9. Matte Beschichtungszusammensetzung nach Anspruch 1, wobei in dem Silicone-Acrylat-Pfropfharz die Polyacrylat-Hauptkette ein Polymer oder ein Copolymer aus Monomeren beinhaltet, die mindestens eines aus der aus n-Butyl(meth)acrylat, Isobutyl(meth)acrylat, Methyl(meth)acrylat, Hydroxyethyl(meth)acrylat und einer Kombination derselben bestehenden Gruppe ausgewähltes beinhalten.

10. Matte Beschichtungszusammensetzung nach Anspruch 1, wobei ein Gesamtgehalt des eine Hydroxylgruppe enthaltenden Harzes auf (Meth)acrylsäureester-Basis und des Silikon-Acrylat-Pfropfharzes 70 bis 95 Gew.-% beträgt.

11. Mattes flächiges Beschichtungsmaterial, das Folgendes umfasst:
eine Harzschicht, die Polyvinylchlorid (PVC) enthält; und
eine harte Beschichtungsschicht, die aus der matten Beschichtungszusammensetzung nach einem der Ansprüche 1 bis 10 gebildet ist, auf einer Oberfläche der Harzschicht.

12. Mattes flächiges Beschichtungsmaterial nach Anspruch 11, wobei die Silikon-Seitenkette des Silicon-Acrylat-Pfropfharzes auf einer Oberfläche der harten Beschichtungsschicht freiliegt.

13. Herstellungsverfahren für ein mattes flächiges Beschichtungsmaterial, das Folgendes umfasst:
Auftragen der matten Beschichtungszusammensetzung nach einem der Ansprüche 1 bis 10 auf eine Polyvinylchlorid (PVC) enthaltende Harzschicht; und
Herstellen einer harten Beschichtungsschicht durch direktes Wärmeaushärten der auf die Harzschicht aufgetragenen matten Beschichtungszusammensetzung.

## Revendications

1. Une composition d'un revêtement mat comprenant :
Une résine à base d'ester d'acide méthacrylique contenant un groupe
hydroxyle ; et
une résine greffée de silicone-acrylate contenant une chaîne principale de polyacrylate et une chaîne latérale de silicone,
dans laquelle un rapport de poids de la résine à base d'ester d'acide méthacrylique contenant un groupe hydroxyle par rapport à la résine greffée de silicone-acrylate va de 1 : 6 à 1 : 4.

2. La composition du revêtement mat selon la revendication 1, dans laquelle la résine à base d'ester d'acide méthacrylique contenant un groupe hydroxyle a une température de transition vitreuse entre 50 °C et 100 °C.

3. La composition du revêtement mat selon la revendication 1, dans laquelle la résine greffée de silicone-acrylate contient un groupe hydroxyle.

4. La composition du revêtement mat selon la revendication 1, dans laquelle la chaîne latérale de silicone est formée en greffant un composant silicone ayant une masse moléculaire pondérée moyenne entre 1 000 et 10 000.

5. La composition du revêtement mat selon la revendication 1, dans laquelle la résine greffée de silicone-acrylate contient entre 1 et 20 % en poids de la chaine latérale en silicone.

6. La composition du revêtement mat selon la revendication 1, dans laquelle la résine à base d'ester d'acide méthacrylique contenant un groupe hydroxyle a une masse moléculaire pondérée moyenne entre 40 000 et 80 000 et la résine greffée de silicone-acrylate a une masse moléculaire pondérée moyenne entre 1 000 et 20 000.

7. La composition du revêtement mat selon la revendication 1, dans laquelle la résine à base d'ester d'acide méthacrylique contenant un groupe hydroxyle est un copolymère formé en copolymérisant un premier monomère incluant au moins un choisi dans le groupe constitué de méthacrylate de n-butyle, de méthacrylate d'isobutyle, de méthacrylate de méthyle et une combinaison de ceux-ci ; et un second monomère incluant au moins un sélectionné dans le groupe constitué de méthacrylate
d'hydroxyéthyle, de diméthacrylate d'éthylène glycol, et d'une combinaison de ceux-ci.

8. La composition du revêtement mat selon la revendication 7, dans laquelle la résine à base d'ester d'acide méthacrylique contenant un groupe hydroxyle est le copolymère formé en copolymérisant le première monomère et le second monomère avec un rapport moléculaire de 2 : 1 à 10 : 1.

9. La composition du revêtement mat selon la revendication 1, dans laquelle la résine greffée de silicone-acrylate, la chaîne principale de polyacrylate inclut un polymère ou un copolymère de monomères incluant au moins un sélectionné dans le groupe constitué de méthacrylate de n-butyle, de méthacrylate d'isobutyle, de méthacrylate de méthyle, de méthacrylate d'hydroxyéthyle, et d'une combinaison de ceux-ci.

10. La composition du revêtement mat selon la revendication 1, dans laquelle la teneur totale en résine à base d'ester d'acide méthacrylique contenant un groupe hydroxyle et en résine greffée de silicone-acrylate va de 70 à 95 % en poids.

11. Une feuille de revêtement mat comprenant :
une couche de résine contenant du polychlorure de vinyle (PVC); et
une couche de revêtement dur formée à partir de la composition du revêtement mat selon n'importe laquelle des revendications de 1 à 10 sur une surface de la couche de résine.

12. La feuille de revêtement mat selon la revendication 11, dans laquelle la chaîne latérale de résine greffée de silicone-acrylate est exposée sur une surface de couche de revêtement dur.

13. Une méthode de fabrication d'une feuille de revêtement mat comprenant :
l'application de la composition du revêtement mat selon n'importe laquelle des revendications de 1 à 10 sur une couche de résine contenant du polychlorure de vinyle (PVC) ; et
la fabrication d'une couche de revêtement dur en polymérisant directement la composition du revêtement mat sur la couche de résine.
